# EUROPEAN PATENT APPLICATION

(11) **EP 4 447 581 A1**
(43) Date of publication of application: **16.10.2024**
(21) Application number: 22914400.1
(22) Date of filing: 20.12.2022
(51) Int. Cl.: H04W 72/04

(54) **COMMUNICATION APPARATUS AND COMMUNICATION METHOD**

(30) Priority: 30.12.2021 CN 202111656952
(71) Applicant: Huawei Technologies Co., Ltd., Shenzhen, Guangdong 518129 (CN)
(72) Inventor: HUANG, Fei, Shenzhen, Guangdong 518129 (CN); ZHANG, Guanxi, Shenzhen, Guangdong 518129 (CN); WANG, Chuanbang, Shenzhen, Guangdong 518129 (CN)
(74) Representative: Isarpatent
(86) International application number: PCT/CN2022/140364
(87) International publication number: WO 2023/125146

(57) **Abstract**

Embodiments of this application disclose a communication apparatus and a communication method. The communication apparatus includes a transmitting module, a receiving module, a first duplexer, and a switch module. The transmitting module is connected to the switch module, the receiving module is connected to the switch module, and the first duplexer is connected to the switch module. The switch module is configured to control switching between connection modes. The connection modes include a first connection mode and a second connection mode. In the first connection mode, the transmitting module is configured to send a transmitted signal of a first band to the first duplexer, and the receiving module is configured to receive a received signal of a second band from the first duplexer. In the second connection mode, the transmitting module is configured to send a transmitted signal of the second band to the first duplexer, and the receiving module is configured to receive a received signal of the first band from the first duplexer. According to the communication apparatus in this application, a full duplex communication requirement of an access network device (for example, a base station) can be matched.

## Description

This application claims priority to Chinese Patent Application No. 202111656952.5, filed with the China National Intellectual Property Administration on December 30, 2021 and entitled "COMMUNICATION METHOD AND COMMUNICATION APPARATUS", which is incorporated herein by reference in its entirety.

### TECHNICAL FIELD

Embodiments of this application relate to the wireless communication field, and in particular, to a communication apparatus and a communication method.

### BACKGROUND

Frequency division duplex (frequency division duplex, FDD) is a common wireless communication technology. A principle of frequency division duplex is that two separate frequency channels (with a specific frequency spacing requirement) are used in uplink (for example, from a terminal device to a base station) and downlink (for example, from a base station to a terminal device) for operations and the operations are performed on symmetric frequency bands. In other words, in an FDD mode, a communication device performs receiving and sending on two separate symmetric frequency channels. Due to this communication feature of FDD, FDD has natural advantages in power control, link adaptation, channel and interference feedback, and the like.

However, due to the communication feature of FDD, an uplink band can only be used for single sending, and a downlink band can only be used for single receiving. In an FDD communication system including a terminal device and a base station, a requirement for a spectrum resource is high. In view of this, a person skilled in the art proposes a concept of FDD full duplex, which may be understood as that a communication signal can be simultaneously received and transmitted on an FDD uplink band, and a communication signal can also be simultaneously received and transmitted on an FDD downlink band. The FDD full duplex communication mode introduces interference between an uplink signal and a downlink signal. For the base station, self-interference cancellation between an uplink signal and a downlink signal can be implemented by improving a hardware architecture and an antenna array of the base station. For the terminal device, due to limitations of a hardware size and a quantity of antennas, it is hardly to implement self-interference cancellation between an uplink signal and a downlink signal as the base station does. Therefore, how to enable a terminal device to match an FDD full duplex communication requirement of a base station is an urgent problem to be resolved by a person skilled in the art.

### SUMMARY

Embodiments of this application provide a communication apparatus and a communication method, so that the communication apparatus can support different communication modes on an FDD frequency resource, a communication signal can be received on an FDD uplink frequency resource, and a communication signal can be sent on an FDD downlink frequency resource, to match an FDD full duplex communication requirement of an access network device (for example, a base station).

According to a first aspect, this application provides a communication apparatus. The communication apparatus includes a transmitting module, a receiving module, a first duplexer, and a switch module. The transmitting module is connected to the switch module, the receiving module is connected to the switch module, and the first duplexer is connected to the switch module. The first duplexer is configured to separate a signal of a first band from a signal of a second band. The switch module is configured to control switching between connection modes. The connection modes include a first connection mode and a second connection mode. In the first connection mode, the transmitting module is configured to send a transmitted signal of the first band to the first duplexer, and the receiving module is configured to receive a received signal of the second band from the first duplexer. In the second connection mode, the transmitting module is configured to send a transmitted signal of the second band to the first duplexer, and the receiving module is configured to receive a received signal of the first band from the first duplexer. According to the communication apparatus, an FDD full duplex communication requirement of an access network device (for example, a base station) can be matched. With reference to the first aspect, in a possible implementation, the communication apparatus further includes a first filter, the first filter is connected to the switch module, and the connection modes further include a third connection mode. The first filter is configured for the signal of the first band and the signal of the second band to pass through. In the third connection mode, the transmitting module is configured to send transmitted signals of the first band and the second band to the first filter.

With reference to the first aspect, in a possible implementation, the first duplexer includes a first port and a second port. An operating band of the first port is the first band. An operating band of the second port is the second band.

With reference to the first aspect, in a possible implementation, in the first connection mode, the switch module controls the transmitting module to be connected to the first port, and controls the receiving module to be connected to the second port. In the second connection mode, the switch module controls the transmitting module to be connected to the second port, and controls the receiving module to be connected to the first port.

With reference to the first aspect, in a possible implementation, in the third connection mode, the receiving module is configured to receive received signals of the first band and the second band from the first filter.

With reference to the first aspect, in a possible implementation, the communication apparatus further includes a feedback path. The feedback path is configured to couple the transmitted signal to an intermediate frequency or a baseband for power control or non-linear compensation processing.

With reference to the first aspect, in a possible implementation, the communication apparatus further includes an antenna and a first filter. The switch modules include a first switch module and a second switch module. The transmitting module is connected to the first switch module, the receiving module is connected to the first switch module, the first duplexer is connected to the first switch module, and the first filter is connected to the first switch module. The first duplexer is connected to the second switch module, the first filter is connected to the second switch module, the antenna is connected to the second switch module, the second switch module is connected to the feedback path, and the antenna is connected to the feedback path.

With reference to the first aspect, in a possible implementation, a center frequency of an operating band of the feedback path is a center frequency of a band of the transmitted signal.

With reference to the first aspect, in a possible implementation, the operating band of the feedback path includes the band of the transmitted signal.

With reference to the first aspect, in a possible implementation, the receiving module includes a first receiving module and a second receiving module. The first receiving module is configured to receive the received signal of the first band. The second receiving module is configured to receive the received signal of the second band.

With reference to the first aspect, in a possible implementation, the first duplexer includes a first port and a second port. An operating band of the first port is the first band. An operating band of the second port is the second band. In the first connection mode, the switch module controls the transmitting module to be connected to the first port, and controls the second receiving module to be connected to the second port. In the second connection mode, the switch module controls the transmitting module to be connected to the second port, and controls the first receiving module to be connected to the first port.

With reference to the first aspect, in a possible implementation, the receiving module includes a first receiving module and a second receiving module. The first receiving module is configured to receive the received signal of the first band. The second receiving module is configured to receive the received signal of the second band. In the third connection mode, the first receiving module is configured to receive the received signal of the first band from the first duplexer, and the second receiving module is configured to receive the received signal of the second band from the first duplexer.

With reference to the first aspect, in a possible implementation, the first duplexer includes a first port and a second port. An operating band of the first port is the first band. An operating band of the second port is the second band. In the third connection mode, the switch module controls the transmitting module to be connected to the first filter, or the switch module controls the first receiving module to be connected to the first port, and controls the second receiving module to be connected to the second port.

With reference to the first aspect, in a possible implementation, the communication apparatus further includes a second duplexer, the second duplexer is configured to separate a signal of a third band from a signal of a fourth band, and the connection modes further include a fourth connection mode and a fifth connection mode. In the fourth connection mode, the transmitting module is configured to send a transmitted signal of the third band to the second duplexer, and the receiving module is configured to receive a received signal of the fourth band from the second duplexer. In the fifth connection mode, the transmitting module is configured to send a transmitted signal of the fourth band to the second duplexer, and the receiving module is configured to receive a received signal of the third band from the second duplexer.

With reference to the first aspect, in a possible implementation, the communication apparatus further includes a second filter, and the connection modes further include a sixth connection mode. The second filter is configured for the signal of the third band and the signal of the fourth band to pass through. In the sixth connection mode, the transmitting module is configured to send transmitted signals of the third band and the fourth band to the second filter.

With reference to the first aspect, in a possible implementation, in the sixth connection mode, the receiving module is configured to receive received signals of the third band and the fourth band from the second filter.

With reference to the first aspect, in a possible implementation, the receiving module includes a third receiving module and a fourth receiving module. The third receiving module is configured to receive the received signal of the third band. The fourth receiving module is configured to receive the received signal of the fourth band.

With reference to the first aspect, in a possible implementation, in the sixth connection mode, the third receiving module is configured to receive the received signal of the third band from the second duplexer, and the fourth receiving module is configured to receive the received signal of the fourth band from the second duplexer.

According to a second aspect, this application provides a communication method. The method is applied to a communication apparatus. The communication apparatus includes a transmitting module, a receiving module, a first duplexer, and a switch module. The method includes: controlling switching between connection modes by using the switch module, where the connection modes include a first connection mode and a second connection mode; in the first connection mode, sending a transmitted signal of a first band to the first duplexer by using the transmitting module, and receiving a received signal of a second band from the first duplexer by using the receiving module; and in the second connection mode, sending a transmitted signal of the second band to the first duplexer by using the transmitting module, and receiving a received signal of the first band from the first duplexer by using the receiving module. According to the method, the communication apparatus can match an FDD full duplex communication requirement of an access network device (for example, a base station).

Optionally, the first band and the second band do not overlap, and signals of the first band and the second band may be respectively an uplink band (or referred to as an uplink operating band) and a downlink band (or referred to as a downlink operating band) in an FDD mode. For example, the first band and the second band may be respectively an uplink band and a downlink band that are divided for the FDD mode in the 3rd Generation Partnership Project (The 3rd Generation Partnership Project, 3GPP) Release 16 (R16) protocol. It should be noted that, in different systems and different scenarios, bands may be divided in different manners. In addition, with evolution of wireless communication, a new band division manner may be used. Based on different band division manners, manners of obtaining values of the first band and the second band may be different.

With reference to the second aspect, in a possible implementation, the communication apparatus further includes a first filter, and the connection modes further include a third connection mode. The method further includes: in the third connection mode, sending transmitted signals of the first band and the second band to the first filter by using the transmitting module.

With reference to the second aspect, in a possible implementation, the first duplexer includes a first port and a second port. An operating band of the first port is the first band. An operating band of the second port is the second band.

With reference to the second aspect, in a possible implementation, the method further includes: in the first connection mode, controlling, by using the switch module, the transmitting module to be connected to the first port, and controlling the receiving module to be connected to the second port; and in the second connection mode, controlling, by using the switch module, the transmitting module to be connected to the second port, and controlling the receiving module to be connected to the first port.

With reference to the second aspect, in a possible implementation, the method further includes: in the third connection mode, receiving received signals of the first band and the second band from the first filter by using the receiving module.

With reference to the second aspect, in a possible implementation, the communication apparatus further includes a feedback path. The method further includes: coupling the transmitted signal to an intermediate frequency or a baseband through the feedback path for power control or non-linear compensation processing.

With reference to the second aspect, in a possible implementation, the receiving module includes a first receiving module and a second receiving module. The first receiving module is configured to receive the received signal of the first band. The second receiving module is configured to receive the received signal of the second band.

With reference to the second aspect, in a possible implementation, the first duplexer includes a first port and a second port. An operating band of the first port is the first band. An operating band of the second port is the second band. The method further includes: in the first connection mode, controlling, by using the switch module, the transmitting module to be connected to the first port, and controlling the second receiving module to be connected to the second port; and in the second connection mode, controlling, by using the switch module, the transmitting module to be connected to the second port, and controlling the first receiving module to be connected to the first port.

With reference to the second aspect, in a possible implementation, the receiving module includes a first receiving module and a second receiving module. The first receiving module is configured to receive the received signal of the first band. The second receiving module is configured to receive the received signal of the second band. The method further includes: in the third connection mode, receiving the received signal of the first band from the first duplexer by using the first receiving module, and receiving the received signal of the second band from the first duplexer by using the second receiving module.

With reference to the second aspect, in a possible implementation, the first duplexer includes a first port and a second port. An operating band of the first port is the first band. An operating band of the second port is the second band. The method further includes: in the third connection mode, controlling, by using the switch module, the transmitting module to be connected to the first filter, or controlling, by using the switch module, the first receiving module to be connected to the first port, and controlling the second receiving module to be connected to the second port.

With reference to the second aspect, in a possible implementation, the communication apparatus further includes a second duplexer, and the connection modes further include a fourth connection mode and a fifth connection mode. The method further includes: in the fourth connection mode, sending a transmitted signal of a third band to the second duplexer by using the transmitting module, and receiving a received signal of a fourth band from the second duplexer by using the receiving module; and in the fifth connection mode, sending a transmitted signal of the fourth band to the second duplexer by using the transmitting module, and receiving a received signal of the third band from the second duplexer by using the receiving module.

With reference to the second aspect, in a possible implementation, the communication apparatus further includes a second filter, and the connection modes further include a sixth connection mode. The method further includes: in the sixth connection mode, sending transmitted signals of the third band and the fourth band to the second filter by using the transmitting module.

With reference to the second aspect, in a possible implementation, the method further includes: in the sixth connection mode, receiving received signals of the third band and the fourth band from the second filter by using the receiving module.

With reference to the second aspect, in a possible implementation, the receiving module includes a third receiving module and a fourth receiving module. The third receiving module is configured to receive the received signal of the third band. The fourth receiving module is configured to receive the received signal of the fourth band.

With reference to the second aspect, in a possible implementation, the method further includes: in the sixth connection mode, receiving the received signal of the third band from the second duplexer by using the third receiving module, and receiving the received signal of the fourth band from the second duplexer by using the fourth receiving module.

According to a third aspect, this application provides a computer-readable storage medium. The computer-readable storage medium is configured to store instructions. When the instructions are executed, the method according to any one of the second aspect or the possible implementations of the second aspect is implemented.

According to a fourth aspect, this application provides a computer program product. The computer program product includes a computer program or instructions. When the computer program or the instructions is/are run on a computer, the method according to any one of the second aspect or the possible implementations of the second aspect is implemented.

According to the solution of this application, switching between connection modes may be controlled by using the switch module in the communication apparatus. In the first connection mode, the transmitting module is configured to send the transmitted signal of the first band to the first duplexer, and the receiving module is configured to receive the received signal of the second band from the first duplexer. In the second connection mode, the transmitting module is configured to send the transmitted signal of the second band to the first duplexer, and the receiving module is configured to receive the received signal of the first band from the first duplexer. In addition to sending a communication signal on an FDD uplink frequency resource and receiving a communication signal on an FDD downlink frequency resource, the communication apparatus in this application may further receive a communication signal on the FDD uplink frequency resource and send a communication signal on the FDD downlink frequency resource, so that a full duplex communication requirement of a network device can be matched.

### BRIEF DESCRIPTION OF DRAWINGS

To describe the technical solutions in embodiments of this application or the prior art more clearly, the following briefly describes the accompanying drawings for describing embodiments or the prior art.
FIG. 1 is a diagram of a network architecture of a wireless communication system according to an embodiment of this application;
FIG. 2 is a diagram of a structure of a communication apparatus according to an embodiment of this application;
FIG. 3 is a connection diagram of a communication apparatus in a first connection mode according to an embodiment of this application;
FIG. 4 is a connection diagram of a communication apparatus in a second connection mode according to an embodiment of this application;
FIG. 5 is a diagram of another communication apparatus according to an embodiment of this application;
FIG. 6 is a diagram of another communication apparatus according to an embodiment of this application;
FIG. 7 is a connection diagram of a communication apparatus in a third connection mode according to an embodiment of this application;
FIG. 8 is a diagram of another communication apparatus according to an embodiment of this application;
FIG. 9 is a diagram of another communication apparatus according to an embodiment of this application;
FIG. 10 is a diagram of an operating band of a feedback path according to an embodiment of this application;
FIG. 11 is a diagram of another communication apparatus according to an embodiment of this application;
FIG. 12 is a diagram of another communication apparatus according to an embodiment of this application;
FIG. 13 is a diagram of another communication apparatus according to an embodiment of this application;
FIG. 14 is a diagram of another communication apparatus according to an embodiment of this application;
FIG. 15 is a diagram of another communication apparatus according to an embodiment of this application; and
FIG. 16 is a flowchart of a communication method according to an embodiment of this application.

### DESCRIPTION OF EMBODIMENTS

The following describes the technical solutions in embodiments of this application in more detail.

Terms used in the following embodiments of this application are merely intended to describe specific embodiments, but are not intended to limit this application. Terms "one", "a", "the", "the foregoing", "this", and "the one" of singular forms used in the specification and the appended claims of this application are also intended to include plural forms, unless otherwise specified in the context clearly. It should be further understood that the term "and/or" used in this application indicates and includes any or all possible combinations of one or more listed items. The term "a plurality of" used in this application means two or more.

It should be noted that, the terms "first", "second", "third", and the like in the specification, claims, and accompanying drawings of this application are intended to distinguish between similar objects but do not necessarily indicate a specific order or sequence. It should be understood that data used in such a way is interchangeable in appropriate circumstances, so that embodiments of this application described herein can be implemented in an order other than the order illustrated or described herein. In addition, the term "include" and any variants thereof are intended to cover the non-exclusive inclusion, for example, a process, method, system, product, or server that includes a list of steps or units is not necessarily limited to those steps or units expressly listed, but may include other steps or units not expressly listed or inherent to such a process, method, product, or device.

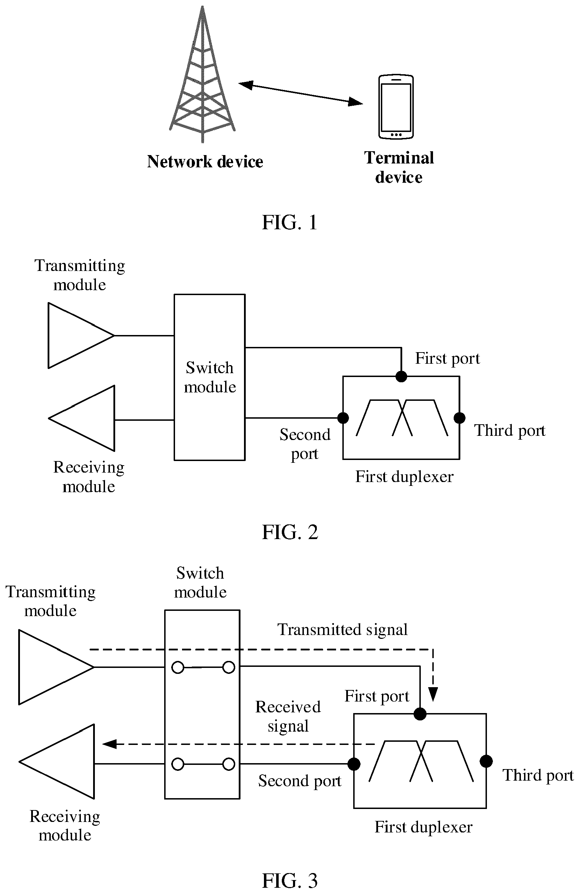

Embodiments of this application may be applied to a network architecture shown in FIG. 1. The network architecture shown in FIG. 1 is a network architecture of a wireless communication system. The network architecture usually includes a terminal device and a network device (or referred to as an access network device). Quantities and forms of devices do not constitute any limitation on embodiments of this application. For example, there may be a plurality of terminal devices in FIG. 1, and the network device provides a network for the plurality of terminal devices.

It should be noted that the wireless communication system mentioned in embodiments of this application includes but is not limited to an internet of things (internet of things, IoT) system, a long term evolution (long term evolution, LTE) system, a 5th generation mobile communication (5th generation, 5G) system, a 6th generation mobile communication (6th generation, 6G) system, and a future mobile communication system. In some embodiments, the technical solutions in embodiments of this application may be further applied to a wireless local area network (Wireless Local Area Network, WLAN) network, a vehicle-to-everything (Vehicle-to-X, V2X) network, a non-terrestrial network (non-terrestrial network, NTN), a satellite and high-altitude platform (satellite and High-Altitude Platform, HAP), an enhanced internet of things (LTE enhanced MTO, eMTC), another network, and the like. In some other embodiments, the technical solutions in embodiments of this application may be further applied to a communication-radar integrated communication system, a terahertz communication system, a communication system with a higher frequency, and the like. This is not specifically limited in this application.

The network device in embodiments of this application may be a base station (Base Station, BS). The base station may provide communication services for a plurality of terminal devices, or a plurality of base stations may provide communication services for a same terminal device. In embodiments of this application, the base station is an apparatus deployed in a radio access network to provide a wireless communication function for the terminal device. A base station device may be a base station, a relay station, or an access point. The base station may be an eNB or an eNodeB (evolved NodeB) in long term evolution (Long Term Evolution, LTE). The base station device may alternatively be a radio controller in a cloud radio access network (Cloud Radio Access Network, CRAN) scenario. The base station device may alternatively be a base station device in a future 6G network or a network device in a future evolved PLMN network. The base station device may alternatively be a wearable device, a vehicle-mounted device, or the like. In embodiments of this application, an apparatus configured to implement a function of the network device may be a network device, or may be an apparatus that can support the network device in implementing the function, for example, a chip system. The apparatus may be installed in the network device. For example, the network device may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a media access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP).

The terminal device in embodiments of this application may also be referred to as a terminal, and may be a device having wireless receiving and sending functions. The terminal device in embodiments of this application may include various user equipments (user equipments, UEs) that have a wireless communication function, an access terminal, a UE unit, a UE station, a mobile station, a remote station, a remote terminal, a mobile device, a UE terminal, a terminal, a wireless communication device, a UE agent, or a UE apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, or another processing device connected to a wireless modem, an uncrewed aircraft (or referred to as unmanned aerial vehicle) (unmanned aerial vehicle/drones, UVA), a vehicle-mounted device, a wearable device, a terminal device in a future 6G network, a terminal device in a future evolved PLMN network, or the like. In embodiments of this application, an apparatus configured to implement a function of the terminal may be a terminal; or may be an apparatus that can support the terminal in implementing the function, for example, a chip system. The apparatus may be installed in the terminal. In embodiments of this application, the chip system may include a chip, or may include a chip and another discrete device.

Embodiments of this application may be applied to a device-to-device (device-to-device, D2D) system, a machine-to-machine (machine-to-machine, M2M) system, a vehicle-to-everything (vehicle-to-everything, V2X) system, and the like.

Embodiments of this application may be applied to a next generation microwave scenario, an NR-based microwave scenario, an integrated access backhaul (integrated access backhaul, IAB) scenario, or the like.

In embodiments of this application, the network device and the terminal device may be at fixed positions, or may be movable. The network device and the terminal device may be deployed on land, including an indoor or outdoor device, a handheld device, or a vehicle-mounted device, or may be deployed on water, or may be deployed on an airplane, a balloon, and a satellite in the air. An application scenario of the network device and the terminal device is not limited in embodiments of this application.

For example, the communication apparatus in embodiments of this application may be the terminal device shown in FIG. 1. In another example, the communication apparatus may alternatively be a transceiver apparatus. The transceiver apparatus may be configured on the terminal device in FIG. 1, and configured to send a communication signal to a network device, or receive a communication signal from the network device.

The network architecture and the service scenario described in embodiments of this application are intended to describe the technical solutions in embodiments of this application more clearly, and do not constitute any limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

The following describes some concepts in embodiments of this application.

### 1. Frequency division duplex (frequency division duplex, FDD)

FDD is a common wireless communication technology. A principle of frequency division duplex is that two separate frequency channels (with a specific frequency spacing requirement) are used in uplink (for example, from a terminal device to a base station) and downlink (for example, from a base station to a terminal device) for operations and the operation are performed on symmetric frequency bands. In other words, in an FDD mode, a communication device performs receiving and sending (or referred to as transmitting) on two separate symmetric frequency channels. Due to this communication feature of FDD, FDD has natural advantages in power control, link adaptation, channel and interference feedback, and the like. However, due to the communication feature of FDD, an uplink band can only be used for single sending, and a downlink band can only be used for single receiving.

### 2. Time Division Duplex (time division duplex, TDD)

TDD is a duplex mode of a communication system, and is used to separate a receiving channel from a transmitting channel (or referred to as uplink and downlink) in a mobile communication system. In a mobile communication system in a TDD mode, receiving and transmitting (or referred to as sending) are performed on a same frequency channel, namely, different slots of a carrier, and a receiving channel and a transmitting channel are separated through a guard period. In other words, in the TDD mode, information in uplink and information in downlink may be transmitted on a same carrier frequency, that is, the information in uplink and the information in downlink are transmitted on a same carrier in a time division mode. Due to this communication feature of TDD, all available bandwidths can be efficiently and flexibly used when spectrum allocation is asymmetric. In addition, for different requirements for transmission capacities of uplink and downlink of a multimedia application, the TDD mode can be used to dynamically allocate capacities for uplink and downlink, to implement flexible resource allocation. In addition, because a same frequency is used in uplink and downlink, consistency between uplink and downlink is good. When transmit power of a mobile station is controlled, open loop power control may be used to replace complex closed loop power control.

### 3. Duplexer (duplexer)

A duplexer is usually a three-port component, and may be considered as a special bidirectional three-port filter. For the duplexer, a weak received signal may be coupled, and a transmitted signal with high power may be fed to an antenna. In addition, the duplexer may isolate the transmitted signal from the received signal, to ensure that a communication apparatus can simultaneously and normally receive and transmit a communication signal. The duplexer may be equivalently understood as two band-pass filters with different frequencies, and may prevent a transmitted signal of a local machine from being transmitted to a receiver. In embodiments of this application, the duplexer may be configured to separate two communication signals of different bands to be isolated from each other, to avoid mutual interference.

### 4. Filter (filter)

A filter is a frequency selective apparatus that allows a specific frequency component in a signal to pass through and greatly attenuates other frequency components in the signal. In other words, the filter may effectively perform filtering on a communication signal of a specific band or filter out a communication signal of a band other than the specific band in the communication signal, to obtain the communication signal of the specific band; or filter out a communication signal other than the specific band. In embodiments of this application, the filter may be configured for communication signals of two different bands to pass through and configured to attenuate frequency components other than the two bands in the communication signals.

In a possible manner, an FDD communication mode limits use of bands. An uplink band can only be used for single sending, and a downlink band can only be used for single receiving. In an FDD communication system including a terminal device and a base station, a requirement for a spectrum resource is high. In view of this, a person skilled in the art proposes a concept of FDD full duplex, which may be understood as that a communication signal can be simultaneously received and transmitted on the FDD uplink band, and a communication signal can also be simultaneously received and transmitted on the FDD downlink band. An FDD full duplex communication mode introduces interference between an uplink signal and a downlink signal. For the base station, self-interference cancellation between an uplink signal and a downlink signal can be implemented by improving a hardware architecture and an antenna array of the base station. For the terminal device, due to limitations of a hardware size and a quantity of antennas, it is hardly to implement self-interference cancellation between an uplink signal and a downlink signal as the base station does. In view of this, the solutions in embodiments of this application are provided.

FIG. 2 is a diagram of a structure of a communication apparatus according to an embodiment of this application. The communication apparatus shown in FIG. 2 may be used in the communication system shown in FIG. 1. For example, the communication apparatus may be the terminal device shown in FIG. 1. In another example, the communication apparatus may be a transceiver apparatus. The transceiver apparatus may be configured on the terminal device in FIG. 1, and configured to send a communication signal to a network device or receive a communication signal from the network device. The communication apparatus includes a transmitting module, a receiving module, a first duplexer, and a switch module. Specifically, the transmitting module is connected to the switch module, the receiving module is connected to the switch module, and the first duplexer is connected to the switch module.

The transmitting module is configured to transmit a communication signal. For example, the transmitting module may be a power amplifier (power amplifier, PA), and may increase power of a transmitted signal. The transmitting module has a broadband transmission capability of a first band and a second band. It should be noted that the PA is merely an example of the transmitting module. The transmitting module may be another apparatus having a signal transmission capability, and the apparatus may further have another function.

The receiving module is configured to receive a communication signal. For example, the receiving module may be a low noise amplifier (low noise amplifier, LNA), and can amplify a weak received signal without introducing large noise. The receiving module has a broadband amplification capability of the first band and the second band. It should be noted that the LNA is merely an example of the receiving module. The receiving module may be another apparatus having a signal transmission capability, and the apparatus may further have another function. Optionally, the transmitting module and the receiving module may be integrated into one module with both signal transmission and signal receiving functions. Optionally, the transmitting module and the receiving module may share some components, and these components have signal transmission and signal receiving functions.

The first duplexer is configured to separate a signal of the first band from a signal of the second band. For example, signals of the first band and the second band may be an uplink band (or referred to as an uplink operating band) and a downlink band (or referred to as a downlink operating band) in an FDD mode. Refer to Table 1. Table 1 illustrates division of communication bands in an FDD mode (only a part thereof is illustrated).

**Table 1**

| New radio operating band (NR operating band) | Uplink operating band Base station receive/User equipment transmit (Uplink (UL) operating band BS receive/UE transmit) F_{UL_low} to F_{UL_high} | Downlink operating band Base station transmit/User equipment receive (Downlink (DL) operating band BS transmit/UE receive) F_{DL_low} to F_{DL_high} |
|---|---|---|
| n1 | 1920 MHz to 1980 MHz | 2110 MHz to 2170 MHz |
| n2 | 1850 MHz to 1910 MHz | 1930 MHz to 1990 MHz |
| n3 | 1710 MHz to 1785 MHz | 1805 MHz to 1880 MHz |
| n5 | 824 MHz to 849 MHz | 869 MHz to 894 MHz |
| n7 | 2500 MHz to 2570 MHz | 2620 MHz to 2690 MHz |

The first band and the second band do not overlap. For example, the first band may be an uplink operating band in n1, namely, 1920 MHz to 1980 MHz, and the second band may be a downlink operating band in n1, namely, 2110 MHz to 2170 MHz. Alternatively, the first band may be a downlink operating band in n1, and the second band may be an uplink operating band in n1. Alternatively, the first band may be an uplink operating band in n3, and the second band may be a downlink operating band in n3. It should be noted that the foregoing content describes a possible manner of obtaining values of the first band and the second band based on bands divided in the 3rd Generation Partnership Project (The 3rd Generation Partnership Project, 3GPP) Release 16 (R16) protocol. In different systems and different scenarios, bands may be divided in different manners. In addition, with evolution of wireless communication, a new band division manner may be used. Based on different band division manners, manners of obtaining values of the first band and the second band may be different. This is not limited in this embodiment of this application.

Specifically, the first duplexer includes a first port and a second port. An operating band of the first port is the first band. An operating band of the second port is the second band. Optionally, the first duplexer may further include a third port (which may also be referred to as a common port), and operating bands of the third port are the first band and the second band.

The first duplexer may be a bidirectional three-port filter. In the first duplexer, one common port (namely, the third port) separates two ports (namely, the first port and the second port) of different bands, and may isolate signals between the two ports of different bands. Both forward isolation and reverse isolation can be implemented. A function of the first duplexer may alternatively be implemented by a multiplexer. For example, duplexers that support a plurality of operating bands (for example, operating bands n1 and n3) may be combined into one multiplexer. The first duplexer may be equivalently understood as two band-pass filters with different frequencies. The first port and the third port are ports of a band-pass filter of the first band. The second port and the third port are ports of a band-pass filter of the second band. That an operating band of the first port is the first band may be understood as that an original communication signal is input to the first duplexer through the first port and is processed by the first duplexer, and then, a communication signal of the first band is output from the third port, so that a communication signal other than the communication signal of the first band in the original communication signal is filtered out. It may also be understood as that an original communication signal is input to the first duplexer through the third port and is processed by the first duplexer, and then, a communication signal of the first band is output from the first port, so that a communication signal other than the communication signal of the first band in the original communication signal is filtered out. In addition, that an operating band of the second port is the second band may be understood in a similar manner. Details are not described herein again.

The switch module is configured to control switching between connection modes. The connection modes include a first connection mode and a second connection mode. The connection mode may be referred to as a connection mode of the switch module, a connection mode of the communication apparatus, or a connection mode of the transmitting module and the receiving module. Optionally, the connection mode may be understood as a connection mode, controlled by the switch module, of the transmitting module and/or the receiving module in the communication apparatus and another module (or a port of the another module). In different connection modes, signal flow directions and/or bands of a transmitted signal and/or a received signal of the communication apparatus may be different. In other words, different connection modes are switched, so that the signal flow directions and/or bands of the transmitted signal and/or the received signal of the communication apparatus can be changed. The signal flow direction of the transmitted signal may be understood as a sequence of modules (or ports of the modules) through which the transmitted signal flows in a process in which the transmitted signal is generated from the communication apparatus and sent to an external apparatus. The signal flow direction of the received signal may be understood as a sequence of modules (or ports of the modules) through which the received signal flows in a process in which the received signal is received from the external apparatus and input to the communication apparatus.

Optionally, the connection mode may alternatively be referred to as a name such as a connection relationship, a connection manner, a connection topology, a connection status, an operating mode, or an operating status. The name is not limited in this application.

Specifically, in the first connection mode, the transmitting module is configured to send a transmitted signal of the first band to the first duplexer, and the receiving module is configured to receive a received signal of the second band from the first duplexer. Further, in the first connection mode, the switch module controls the transmitting module to be connected to the first port, and controls the receiving module to be connected to the second port. For example, FIG. 3 is a connection diagram of a communication apparatus in a first connection mode according to an embodiment of this application. For example, the switch module is a double-pole double-throw switch. The transmitting module is connected to the first port of the first duplexer by using the switch module, and the receiving module is connected to the second port of the first duplexer by using the switch module. For signal flow directions of the transmitted signal (of the first band) and the received signal (of the second band), refer to directions shown by arrows in FIG. 3.

In the first connection mode, for the first duplexer, the weak received signal of the second band may be coupled, and the transmitted signal of the first band with high power may be fed to another apparatus (for example, an antenna). The first duplexer may isolate the transmitted signal from the received signal, to ensure that the communication apparatus can simultaneously and normally receive and transmit a communication signal. For example, if the first band is the uplink band in the FDD mode, and the second band is the downlink band in the FDD mode, the first connection mode may also be named the FDD mode, a forward FDD mode, or a first FDD mode. A name of the first connection mode is not limited in this application.

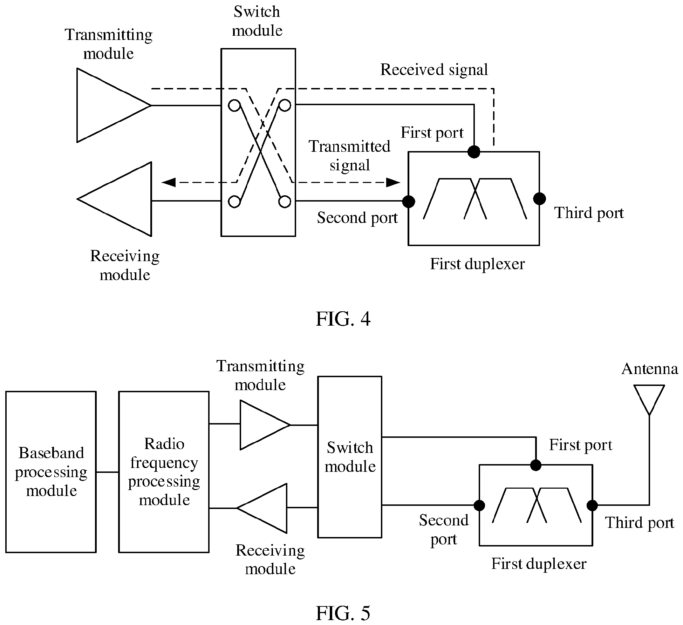

In the second connection mode, the transmitting module is configured to send a transmitted signal of the second band to the first duplexer, and the receiving module is configured to receive a received signal of the first band from the first duplexer. Further, in the second connection mode, the switch module controls the transmitting module to be connected to the second port, and controls the receiving module to be connected to the first port. For example, FIG. 4 is a connection diagram of a communication apparatus in a second connection mode according to an embodiment of this application. For example, the switch module is a double-pole double-throw switch. The transmitting module is connected to the second port of the first duplexer by using the switch module, and the receiving module is connected to the first port of the first duplexer by using the switch module. For signal flow directions of the transmitted signal (of the second band) and the received signal (of the first band), refer to directions shown by arrows in FIG. 4.

In the second connection mode, for the first duplexer, the weak received signal of the first band may be coupled, and the transmitted signal of the second band with high power may be fed to another apparatus (for example, an antenna). The first duplexer may isolate the transmitted signal from the received signal, to ensure that the communication apparatus can simultaneously and normally receive and transmit a communication signal. For example, if the first band is the uplink band in the FDD mode, and the second band is the downlink band in the FDD mode, the first connection mode may also be named a reverse FDD mode or a second FDD mode. A name of the second connection mode is not limited in this application.

It should be further noted that the switch module may be integrated with another module, so that the another module has a function of controlling a connection manner of the another module. For example, the switch module may be integrated with the transmitting module, and the transmitting module may control whether the transmitting module is connected to the first port or the second port of the first duplexer. The switch module may alternatively be integrated with the receiving module, and the receiving module may control whether the receiving module is connected to the first port or the second port of the first duplexer. Alternatively, the switch module, the transmitting module, and the receiving module are all integrated together, and the module may control whether a transmitting port of the module is connected to the first port or the second port of the first duplexer, and control whether a receiving port of the module is connected to the first port or the second port of the first duplexer.

It should be further noted that the communication apparatus may further include another module. For example, the communication apparatus may further include a baseband processing module, a radio frequency processing module, an antenna, and the like. FIG. 5 is a diagram of another communication apparatus according to an embodiment of this application. The baseband processing module is connected to the radio frequency processing module, the radio frequency processing module is connected to the transmitting module and the receiving module, and the antenna is connected to the first duplexer. Specifically, the antenna may be connected to the third port of the first duplexer.

The baseband processing module is configured to convert a digital signal into an analog signal, that is, generate a baseband signal transmitted to an external device (for example, a network device), or is configured to convert an analog signal into a digital signal, that is, process a received baseband signal.

The radio frequency processing module is configured to: receive a signal from the baseband processing module, continue to modulate the signal, modulate a low-frequency signal to a specified high-frequency band, and then send the modulated signal to the transmitting module for further processing, or is configured to: receive a signal from the receiving module, send the signal to an intermediate frequency for demodulation to obtain a received baseband signal, and then send the baseband signal to the baseband processing module for further processing.

The antenna is configured to: convert an alternating current signal from the first duplexer into an electromagnetic wave signal, and transmit a communication signal to the external device in the form of an electromagnetic wave, or is configured to: convert an electromagnetic wave signal sent by a network device (for example, a base station) into a weak alternating current signal, and send the alternating current signal to the first duplexer for further processing.

In an actual application process, the communication apparatus described in this embodiment of this application may include more or fewer modules, to send and receive a communication signal. It should be noted that some of the modules described in this embodiment of this application may be integrated together to form one module having a plurality of functions. A module division manner is not limited in this application.

The communication apparatus shown in FIG. 2 described in the foregoing content may send the sent signal of the first band to an external device (for example, a base station) and receive the received signal of the second band in the first connection mode, and may send the sent signal of the second band to the external device and receive the received signal of the first band in the second connection mode. In this way, frequency resource utilization can be increased. In addition to sending a communication signal on an FDD uplink frequency resource and receiving a communication signal on an FDD downlink frequency resource, the communication apparatus shown in FIG. 2 may further receive a communication signal on the FDD uplink frequency resource and send a communication signal on the FDD downlink frequency resource.

If the communication system includes one network device and a plurality of terminal devices (for example, a terminal device 1 and a terminal device 2), the terminal device is the communication apparatus in this embodiment, or the communication apparatus in this embodiment is configured on the terminal device as a transceiver apparatus.

In some application scenarios, that the network device supports a full duplex communication mode may be understood as that the network device may simultaneously receive and send a communication signal on operating bands (for example, the first band and the second band). The network device may schedule connection modes of the plurality of terminal devices. For example, at a same moment, the network device may indicate the terminal device 1 to be in the first connection mode, and indicate the terminal device 2 to be in the second connection mode. In this case, the network device may simultaneously receive an uplink signal of a first band from the terminal device 1 and an uplink signal of a second band from the terminal device 2, and may simultaneously send a downlink signal of the second band to the terminal device 1, and send an uplink signal of the first band to the terminal device 2. According to the communication apparatus in this embodiment of this application, the plurality of terminal devices can match a full duplex communication requirement of the network device.

The foregoing content describes the communication apparatus provided in this embodiment of this application. Based on the foregoing content, the following content further describes some other possible structures and application manners of the communication apparatus.

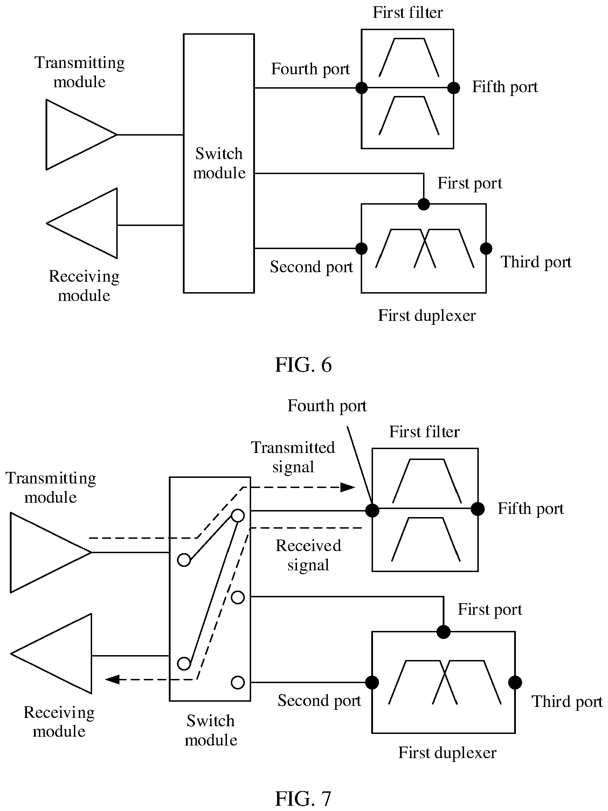

FIG. 6 is a diagram of another communication apparatus according to an embodiment of this application. The communication apparatus shown in FIG. 6 may be used in the communication system shown in FIG. 1. For example, the communication apparatus may be the terminal device shown in FIG. 1. In another example, the communication apparatus may alternatively be a transceiver apparatus. The transceiver apparatus may be configured on the terminal device in FIG. 1, and configured to send a communication signal to a network device or receive a communication signal from the network device. The communication apparatus includes a transmitting module, a receiving module, a first duplexer, a first filter, and a switch module. Specifically, the transmitting module is connected to the switch module, the receiving module is connected to the switch module, the first duplexer is connected to the switch module, and the first filter is connected to the switch module. In other words, compared with the communication apparatus shown in FIG. 2, the communication apparatus shown in FIG. 6 further includes the first filter.

The first filter may be a multi-band filter, and configured for a signal of the first band and a signal of the second band to pass through. For the first band and the second band, refer to the descriptions of the embodiment corresponding to FIG. 2. Details are not described herein again. As shown in FIG. 6, the first filter includes two ports: a fourth port and a fifth port. The fourth port of the first filter is connected to the switch module. That the first filter may allow a signal of the first band and a signal of the second band to pass through may be understood as that an original communication signal is input to the first filter through the fourth port and is processed by the first filter, and then, communication signals of the first band and the second band are output from the fifth port, so that a communication signal other than the communication signals of the first band and the second band in the original communication signal is filtered out. It may also be understood as that an original communication signal is input to the first filter through the fifth port and is processed by the first filter, and then, communication signals of the first band and the second band are output from the fourth port, so that a communication signal other than the communication signals of the first band and the second band in the original communication signal is filtered out.

The communication apparatus shown in FIG. 6 is different from the communication apparatus shown in FIG. 2 in that, the connection modes further include a third connection mode other than the first connection mode and the second connection mode. For cases of the first connection mode and the second connection mode, refer to the descriptions of the foregoing content. Details are not described herein again.

Specifically, in the third connection mode, the transmitting module is configured to send transmitted signals of the first band and the second band to the first filter, and the receiving module is configured to receive received signals of the first band and the second band from the first filter. Further, in the third connection mode, when the communication apparatus needs to send an uplink signal, the switch module controls the transmitting module to be connected to the fourth port of the first filter, and when the communication apparatus needs to receive a downlink signal, the switch module controls the receiving module to be connected to the fourth port of the first filter. For example, FIG. 7 is a connection diagram of a communication apparatus in a third connection mode according to an embodiment of this application. For example, the switch module is a double-pole three-throw (DP3T) switch. The transmitting module is connected to the fourth port of the first filter by using the switch module, and the receiving module is connected to the fourth port of the first filter by using the switch module. For signal flow directions of the transmitted signals (of the first band and the second band) and the received signals (of the first band and the second band), refer to directions shown by arrows in FIG. 7. For example, in the third connection mode, a principle of receiving and sending a signal by the communication apparatus is similar to that of the TDD mode. The third connection mode may be named the TDD mode. A name of the third connection mode is not limited in this application.

If the communication system includes one network device and a plurality of terminal devices (for example, a terminal device 1 and a terminal device 2), the terminal device is the communication apparatus in this embodiment, or the communication apparatus in this embodiment is configured on the terminal device as a transceiver apparatus.

In some application scenarios, that the network device supports a full duplex communication mode may be understood as that the network device may simultaneously receive and send a communication signal on operating bands (for example, the first band and the second band). The network device may schedule connection modes of the plurality of terminal devices. For example, at a same moment, the network device may indicate the terminal device 1 to be in a signal sending process in the third connection mode, and indicate the terminal device 2 to be in a signal receiving process in the third connection mode. In this case, the network device may receive uplink signals of the first band and the second band from the terminal device 1, and may simultaneously send downlink signals of the first band and the second band to the terminal device 2. According to the communication apparatus in this embodiment of this application, the plurality of terminal devices can match a full duplex communication requirement of the network device. It should be further noted that the communication apparatus shown in FIG. 6 may not use a manner in which all the three connection modes are used, and the communication apparatus may use at least two connection modes of the three supported connection modes.

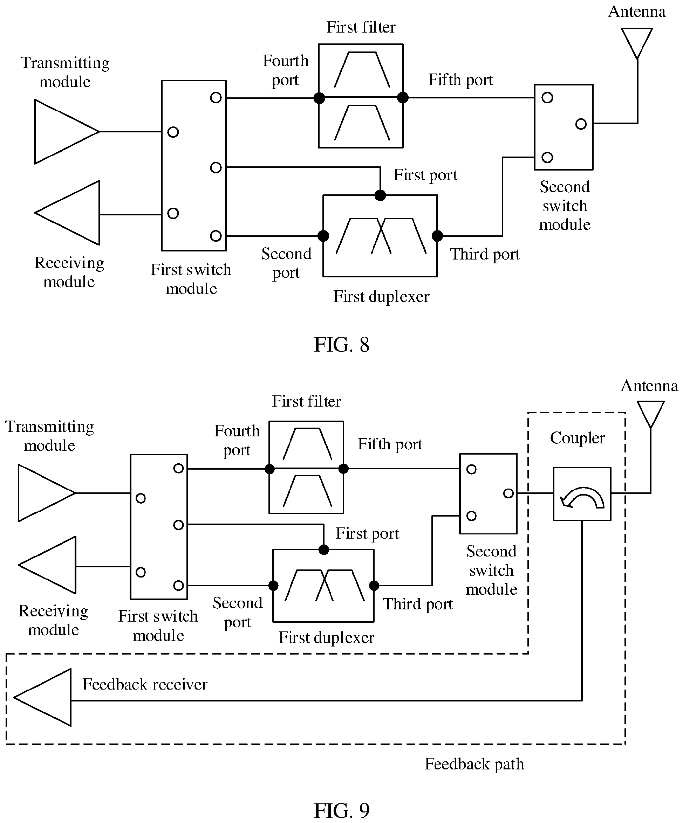

In some embodiments, the communication apparatus further includes an antenna. The switch modules include a first switch module and a second switch module. The first switch module and the second switch module jointly implement a function of controlling switching between connection modes. The communication apparatus shown in FIG. 6 is used as an example for description. FIG. 8 is a diagram of another communication apparatus according to an embodiment of this application. For a module structure and a connection mode that are in FIG. 8 and that are the same as those in FIG. 6, refer to the descriptions of content of the embodiment in FIG. 6. Details are not described herein again.

The first switch module may be a double-pole three-throw switch, and the second switch module may be a single-pole double-throw switch. The transmitting module is connected to the first switch module. The receiving module is connected to the first switch module. The first duplexer (specifically, the first port and the second port) is connected to the first switch module. The first filter (specifically, the fourth port) is connected to the first switch module. The first duplexer (specifically, the third port) is connected to the second switch module. The first filter (specifically, the fifth port) is connected to the second switch module. The antenna is connected to the second switch module.

The following describes a connection status of each connection mode.

In the first connection mode, the first switch module controls the transmitting module to be connected to the first port of the first duplexer, and controls the receiving module to be connected to the second port of the first duplexer, and the second switch module controls the third port of the first duplexer to be connected to the antenna. In this connection mode, the transmitted signal may be sent from the third port of the first duplexer to the antenna, and then transmitted to the external device through the antenna. The received signal may be received through the antenna, and then input to the third port of the first duplexer.

In the second connection mode, the first switch module controls the transmitting module to be connected to the second port of the first duplexer, and controls the receiving module to be connected to the first port of the first duplexer, and the second switch module controls the third port of the first duplexer to be connected to the antenna. In this connection mode, the transmitted signal may be sent from the third port of the first duplexer to the antenna, and then transmitted to the external device through the antenna. The received signal may be received through the antenna, and then input to the third port of the first duplexer.

In the third connection mode, when the communication apparatus needs to send an uplink signal, the first switch module controls the transmitting module to be connected to the fourth port of the first filter, and when the communication apparatus needs to receive a downlink signal, the first switch module controls the receiving module to be connected to the fourth port of the first filter, and the second switch module controls the fifth port of the first filter to be connected to the antenna. In this connection mode, the transmitted signal may be sent from the fifth port of the first filter to the antenna, and then transmitted to the external device through the antenna. The received signal may be received through the antenna, and then input to the fifth port of the first filter.

In a communication system including a plurality of terminal devices and a network device, if a terminal device that is around and at a distance away from a terminal device in a transmitting state is in a receiving state, the terminal device in the receiving state is not interfered by a transmitter of the terminal device in the transmitting state. This avoids a problem that sensitivity of a receiver deteriorates due to interference. Based on this, the network device may perform pairing based on position information, to implement a full duplex mode of the network device. If the transmitting module in this embodiment of this application may be a high-linear transmitter, performance of a spectrum template of the transmitting module can be improved, so that the base station does not need to pair the terminal device based on position information. To achieve an objective of the high-linear transmitter, the communication apparatus may use solutions such as digital predistortion (digital predistortion, DPD), a LINC-outphasing constant envelope PA, and a digital transmitter.

In some possible implementations, the communication apparatus further includes a feedback path. The feedback path is configured to couple the transmitted signal to an intermediate frequency or a baseband for power control or non-linear compensation processing. Performance of the communication apparatus can be improved through the feedback path. For example, the communication apparatus in this embodiment of this application may include the feedback path. FIG. 8 is used as an example for description. FIG. 9 is a diagram of another communication apparatus according to an embodiment of this application. The communication apparatus further includes a feedback path (where the feedback path includes a coupler and a feedback receiver) and an antenna. The second switch module is connected to the feedback path, and the antenna is connected to the feedback path.

Optionally, a center frequency of an operating band of the feedback path is a center frequency of a band of the transmitted signal. For example, if the transmitted signal is the first band, the center frequency of the operating band of the feedback path is a center frequency of the first band; if the transmitted signal is the second band, the center frequency of the operating band of the feedback path is a center frequency of the second band; and if the transmitted signal is the first band and the second band, the center frequency of the operating band of the feedback path is a center frequency of the first band and a center frequency of the second band.

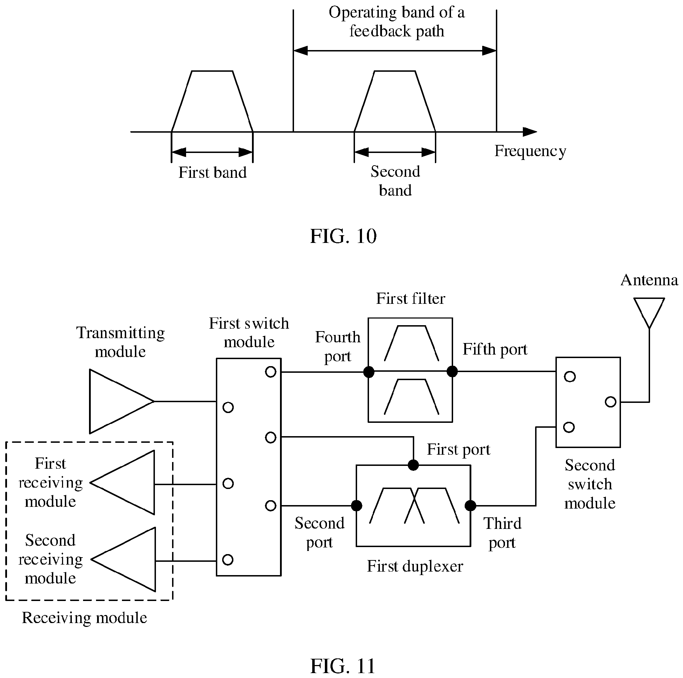

Optionally, the operating band of the feedback path includes the band of the transmitted signal. For example, a bandwidth of the operating band of the feedback path may be three times a bandwidth of the band of the transmitted signal, or another times the bandwidth of the band of the transmitted signal. FIG. 10 is a diagram of an operating band of a feedback path according to an embodiment of this application. In FIG. 10, the first band is a band of a received signal, the second band is a band of a transmitted signal, a center frequency of an operating band of the feedback path is a center frequency of the second band, and a bandwidth of the operating band of the feedback path is three times a bandwidth of the band of the transmitted signal.

Considering that a problem that performance may deteriorate when the receiving module (for example, an LNA) simultaneously receives received signals of two bands, in some embodiments, the receiving module may be divided into two receiving submodules, and the two receiving submodules jointly receive the received signals. In this manner, a signal receiving capability of the communication apparatus can be improved. For example, the receiving module includes a first receiving module and a second receiving module. The first receiving module is configured to receive the received signal of the first band. The second receiving module is configured to receive the received signal of the second band. The communication apparatus shown in FIG. 8 is used as an example for description. FIG. 11 is a diagram of another communication apparatus according to an embodiment of this application. The first receiving module and the second receiving module are both connected to the first switch module. For a module structure and a connection mode that are in FIG. 11 and that are the same as those in FIG. 8, refer to the descriptions of content of the embodiment in FIG. 8. Details are not described herein again.

The following describes a connection status of each connection mode.

In the first connection mode, the first switch module controls the transmitting module to be connected to the first port of the first duplexer, and controls the second receiving module to be connected to the second port of the first duplexer, and the second switch module controls the third port of the first duplexer to be connected to the antenna.

In the second connection mode, the first switch module controls the transmitting module to be connected to the second port of the first duplexer, and controls the first receiving module to be connected to the first port of the first duplexer, and the second switch module controls the third port of the first duplexer to be connected to the antenna.

In the third connection mode, when the communication apparatus needs to send an uplink signal, the first switch module controls the transmitting module to be connected to the fourth port of the first filter, and the second switch module controls the fifth port of the first filter to be connected to the antenna. When the communication apparatus needs to receive a downlink signal, the first switch module controls the first receiving module to be connected to the first port, and controls the second receiving module to be connected to the second port. The first receiving module is configured to receive the received signal of the first band from the first duplexer. The second receiving module is configured to receive the received signal of the second band from the first duplexer. The second switch module controls the third port of the first duplexer to be connected to the antenna.

In some embodiments, to enable the communication apparatus to support multi-band communication, the communication apparatus may further include more duplexers/filters.

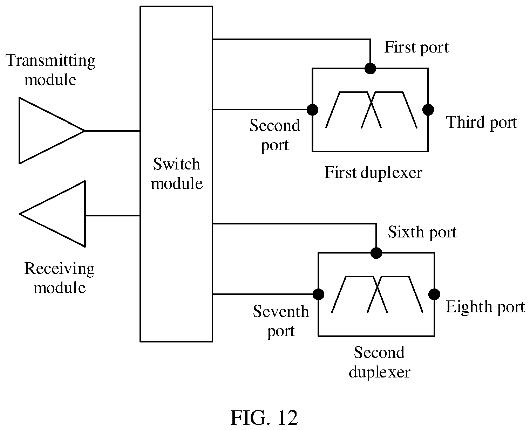

FIG. 12 is a diagram of another communication apparatus according to an embodiment of this application. Compared with the communication apparatus shown in FIG. 2, the communication apparatus shown in FIG. 12 further includes a second duplexer. The second duplexer is configured to separate a signal of a third band from a signal of a fourth band. Similar to the first duplexer, the second duplexer includes a sixth port and a seventh port. An operating band of the sixth port is the third band. An operating band of the seventh port is the fourth band. Optionally, the second duplexer may further include an eighth port (which may also be referred to as a common port), and operating bands of the eighth port are the third band and the fourth band. For a meaning of an operating band of each port, refer to the descriptions of content of the embodiment in FIG. 2. Details are not described herein again. In addition, for a module structure that is in FIG. 12 and that is the same as that in FIG. 2, refer to the descriptions of content of the embodiment in FIG. 2. Details are not described herein again.

The first band, the second band, the third band, and the fourth band are four different communication bands. For example, the first band may be an uplink operating band in n1, namely, 1920 MHz to 1980 MHz, and the second band may be a downlink operating band in n1, namely, 2110 MHz to 2170 MHz. The third band may be an uplink operating band in n2, namely, 1850 MHz to 1910 MHz, and the fourth band may be a downlink operating band in n2, namely, 1930 MHz to 1990 MHz. In this example, the communication apparatus may support dual-band communication of operating bands n1 and n2. It should be noted that, in different systems and different scenarios, bands may be divided in different manners. In addition, with evolution of wireless communication, a new band division manner may be used. Based on different band division manners, manners of obtaining values of the first band, the second band, the third band, and the fourth band may be different. This is not limited in this embodiment of this application.

The switch module is configured to control switching between connection modes. The connection modes include a first connection mode and a second connection mode. For the first connection mode and the second connection mode, refer to the descriptions of content of the embodiment in FIG. 2. Details are not described herein again. In the communication apparatus shown in FIG. 12, the connection modes further include a fourth connection mode and a fifth connection mode.

Specifically, in the fourth connection mode, the transmitting module is configured to send a transmitted signal of the third band to the second duplexer, and the receiving module is configured to receive a received signal of the fourth band from the second duplexer. In the fifth connection mode, the transmitting module is configured to send a transmitted signal of the fourth band to the second duplexer, and the receiving module is configured to receive a received signal of the third band from the second duplexer. It should be noted that, for a port connection manner, a signal flow direction, and a function of the second duplexer in the fourth connection mode, refer to the descriptions of content of the first duplexer in the first connection mode in the embodiment in FIG. 2. For a port connection manner, a signal flow direction, and a function of the second duplexer in the fifth connection mode, refer to the descriptions of content of the first duplexer in the second connection mode in the embodiment in FIG. 2. Details are not described herein again.

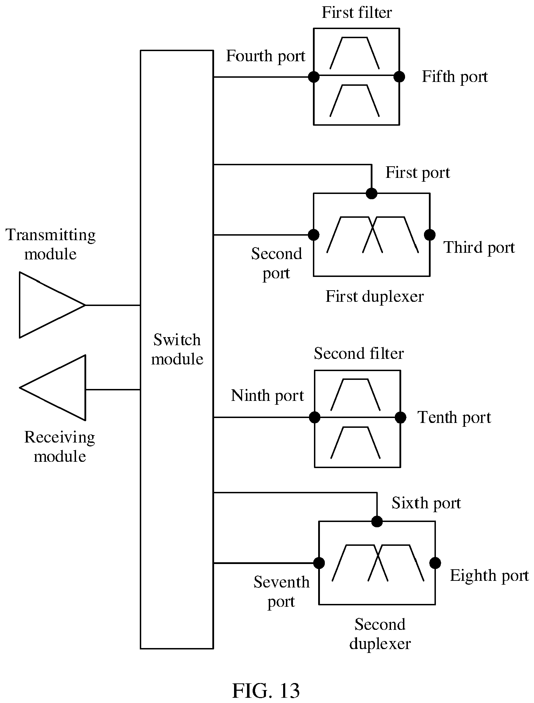

FIG. 13 is a diagram of another communication apparatus according to an embodiment of this application. Compared with the communication apparatus shown in FIG. 12, the communication apparatus shown in FIG. 13 further includes a first filter and a second filter. The first filter is configured for the signal of the first band and the signal of the second band to pass through. The second filter is configured for the signal of the third band and the signal of the fourth band to pass through. For a module structure and a connection mode that are in FIG. 13 and that are the same as those in FIG. 12, refer to the descriptions of content of the embodiment in FIG. 12. Details are not described herein again.

Because the first filter is added, the connection modes may further include a third connection mode. For this part, refer to the descriptions of the embodiment corresponding to FIG. 6. Details are not described herein again. Similar to content of the embodiment corresponding to FIG. 6, because the second filter is added, the connection modes further include a sixth connection mode.

In the sixth connection mode, the transmitting module is configured to send transmitted signals of the third band and the fourth band to the second filter, and the receiving module is configured to receive received signals of the third band and the fourth band from the second filter. For a port connection manner, a signal flow direction, and a function of the second filter in the sixth connection mode, refer to the descriptions of content of the first filter in the third connection mode in the embodiment in FIG. 6. Details are not described herein again.

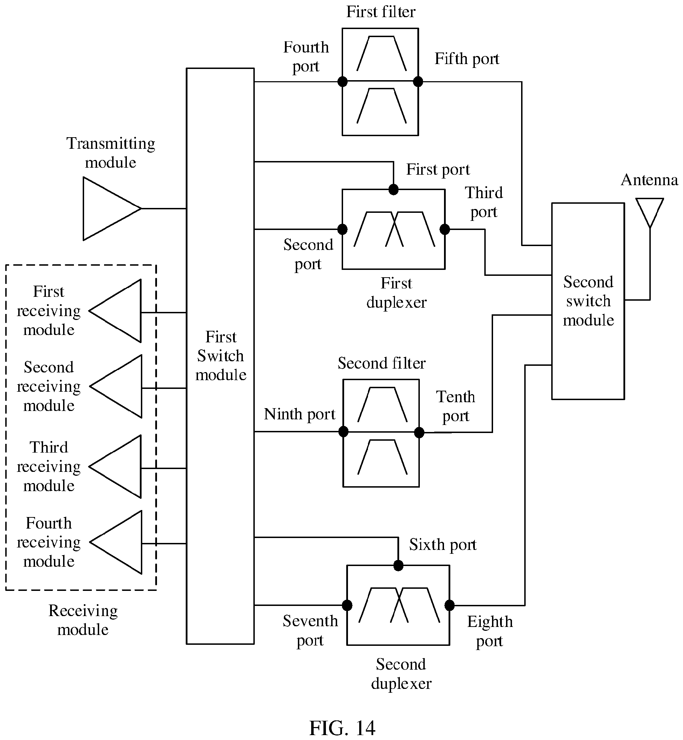

Considering that performance may deteriorate when the receiving module (for example, an LNA) simultaneously receives received signals of four bands, in some embodiments, the receiving module may be divided into four receiving submodules, and the four receiving submodules jointly receive the received signals. In this manner, a signal receiving capability of the communication apparatus can be improved. The receiving module includes a first receiving module and a second receiving module. The first receiving module is configured to receive the received signal of the first band. The second receiving module is configured to receive the received signal of the second band. The receiving module further includes a third receiving module and a fourth receiving module. The third receiving module is configured to receive the received signal of the third band. The fourth receiving module is configured to receive the received signal of the fourth band. FIG. 14 is a diagram of another communication apparatus according to an embodiment of this application. The first receiving module, the second receiving module, the third receiving module, and the fourth receiving module are all connected to the first switch module. For module structures and connection modes in FIG. 14 that are the same as those in FIG. 11, refer to the content descriptions of the embodiment in FIG. 11. Details are not described herein again.

The following describes a connection status of each connection mode.

In the first connection mode, the first switch module controls the transmitting module to be connected to the first port of the first duplexer, and controls the second receiving module to be connected to the second port of the first duplexer, and the second switch module controls the third port of the first duplexer to be connected to the antenna.

In the second connection mode, the first switch module controls the transmitting module to be connected to the second port of the first duplexer, and controls the first receiving module to be connected to the first port of the first duplexer, and the second switch module controls the third port of the first duplexer to be connected to the antenna.

In the third connection mode, when the communication apparatus needs to send an uplink signal, the first switch module controls the transmitting module to be connected to the fourth port of the first filter, and the second switch module controls the fifth port of the first filter to be connected to the antenna. When the communication apparatus needs to receive a downlink signal, the first switch module controls the first receiving module to be connected to the first port, and controls the second receiving module to be connected to the second port. The first receiving module is configured to receive the received signal of the first band from the first duplexer. The second receiving module is configured to receive the received signal of the second band from the first duplexer. The second switch module controls the third port of the first duplexer to be connected to the antenna.

In the fourth connection mode, the first switch module controls the transmitting module to be connected to the sixth port of the second duplexer, and controls the second receiving module to be connected to the seventh port of the first duplexer, and the second switch module controls the eighth port of the second duplexer to be connected to the antenna.

In the fifth connection mode, the first switch module controls the transmitting module to be connected to the seventh port of the second duplexer, and controls the third receiving module to be connected to the sixth port of the second duplexer, and the second switch module controls the eighth port of the second duplexer to be connected to the antenna.

In the sixth connection mode, when the communication apparatus needs to send an uplink signal, the first switch module controls the transmitting module to be connected to a ninth port of the second filter, and the second switch module controls a tenth port of the second filter to be connected to the antenna. When the communication apparatus needs to receive a downlink signal, the first switch module controls the third receiving module to be connected to the sixth port, and controls the fourth receiving module to be connected to the seventh port. The third receiving module is configured to receive the received signal of the third band from the first duplexer. The fourth receiving module is configured to receive the received signal of the fourth band from the second duplexer. The second switch module controls the eighth port of the second duplexer to be connected to the antenna.

It should be noted that the switch modules (including the first switch module and the second switch module) in the foregoing content may alternatively have another possible design. For example, the switch module may include a plurality of switches to implement a function of the switch module. Optionally, the switch module may be integrated with the transmitting module, or the switch module may be integrated with the receiving module, or the switch module, the transmitting module, and the receiving module are all integrated together. A design of the switch module is not limited in this embodiment of this application.

In addition, content of embodiments in FIG. 12 to FIG. 14 is described by using an example in which the communication apparatus supports dual-band communication. During actual application, the communication apparatus may support communication of more operating bands. Correspondingly, the communication apparatus may include more duplexers/filters. As more duplexers/filters are added, connection modes of the communication apparatus are also increased. For a manner of adding a duplexer/filter to the communication apparatus, refer to the descriptions of content of embodiments in FIG. 12 to FIG. 14. Details are not described herein again.

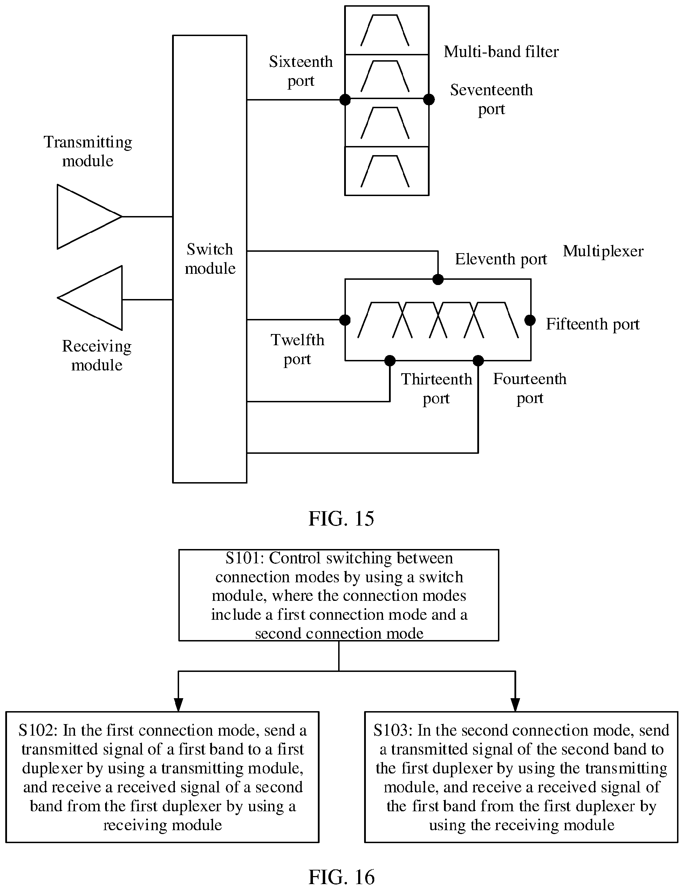

In another possible implementation, a plurality of duplexers that support different bands may be combined into one multiplexer, to support a multi-band operation of the communication apparatus, and a plurality of filters that support different bands may be combined into one multi-band filter, to support the multi-band operation of the communication apparatus. For example, FIG. 15 is a diagram of another communication apparatus according to an embodiment of this application. The communication apparatus shown in FIG. 15 includes a transmitting module, a receiving module, a multiplexer, a multi-band filter, and a switch module.

The transmitting module is connected to the switch module, the receiving module is connected to the switch module, the multiplexer is connected to the switch module, and the multi-band filter is connected to the switch module. For functions of the transmitting module and the receiving module, refer to the descriptions of content of the foregoing embodiment. Details are not described herein again.

The multiplexer is configured to separate a signal of a first band, a signal of a second band, a signal of a third band, and a signal of a fourth band. The multiplexer includes an eleventh port, a twelfth port, a thirteenth port, a fourteenth port, and a fifteenth port. An operating band of the eleventh port is the first band. An operating band of the twelfth port is the second band. An operating band of the thirteenth port is the third band. An operating band of the fourteenth port is the fourth band. The fifteenth port is a common port, and operating bands of the fifteenth port are the first band, the second band, the third band, and the fourth band. It may be understood that, compared with the communication apparatus shown in FIG. 13, the multiplexer implements functions of the first duplexer and the second duplexer.

The multi-band filter is configured for the signal of the first band, the signal of the second band, the signal of the third band, and the signal of the fourth band to pass through. The multi-band filter includes a sixteenth port and a seventeenth port. It may be understood that, compared with the communication apparatus shown in FIG. 13, the multi-band filter implements functions of the first filter and the second filter.

The switch module is configured to control switching between connection modes. The connection modes include a first connection mode, a second connection mode, a third connection mode, a fourth connection mode, a fifth connection mode, and a sixth connection mode.

In the first connection mode, the transmitting module is configured to send a transmitted signal of the first band to the multiplexer, and the receiving module is configured to receive a received signal of the second band from the multiplexer. The switch module controls the transmitting module to be connected to the eleventh port, and controls the receiving module to be connected to the twelfth port.

In the second connection mode, the transmitting module is configured to send a transmitted signal of the second band to the multiplexer, and the receiving module is configured to receive a received signal of the first band from the multiplexer. The switch module controls the transmitting module to be connected to the twelfth port, and controls the receiving module to be connected to the eleventh port.

In the third connection mode, the transmitting module is configured to send transmitted signals of the first band and the second band to the multi-band filter, and the receiving module is configured to receive received signals of the first band and the second band from the multi-band filter. When the communication apparatus needs to send an uplink signal, the switch module controls the transmitting module to be connected to the sixteenth port of the multi-band filter, and when the communication apparatus needs to receive a downlink signal, the switch module controls the receiving module to be connected to the sixteenth port of the multi-band filter.

In the fourth connection mode, the transmitting module is configured to send a transmitted signal of the third band to the multiplexer, and the receiving module is configured to receive a received signal of the fourth band from the multiplexer. The switch module controls the transmitting module to be connected to the thirteenth port, and controls the receiving module to be connected to the fourteenth port.

In the fifth connection mode, the transmitting module is configured to send a transmitted signal of the fourth band to the multiplexer, and the receiving module is configured to receive a received signal of the third band from the multiplexer. The switch module controls the transmitting module to be connected to the fourteenth port, and controls the receiving module to be connected to the thirteenth port.

In the sixth connection mode, the transmitting module is configured to send transmitted signals of the third band and the fourth band to the multi-band filter, and the receiving module is configured to receive received signals of the third band and the fourth band from the multi-band filter. When the communication apparatus needs to send an uplink signal, the switch module controls the transmitting module to be connected to the sixteenth port of the multi-band filter, and when the communication apparatus needs to receive a downlink signal, the switch module controls the receiving module to be connected to the sixteenth port of the multi-band filter.

FIG. 16 is a flowchart of a communication method according to an embodiment of this application. The method is applied to a communication apparatus, and the communication apparatus includes a transmitting module, a receiving module, a first duplexer, and a switch module. The method includes the following steps.

S101: Control switching between connection modes by using the switch module, where the connection modes include a first connection mode and a second connection mode.

S102: In the first connection mode, send a transmitted signal of a first band to the first duplexer by using the transmitting module, and receive a received signal of a second band from the first duplexer by using the receiving module.

S103: In the second connection mode, send a transmitted signal of the second band to the first duplexer by using the transmitting module, and receive a received signal of the first band from the first duplexer by using the receiving module.

In a possible implementation, the communication apparatus further includes a first filter, and the connection modes further include a third connection mode. The method further includes: in the third connection mode, sending transmitted signals of the first band and the second band to the first filter by using the transmitting module.

In a possible implementation, the first duplexer includes a first port and a second port. An operating band of the first port is the first band. An operating band of the second port is the second band.

In a possible implementation, the method further includes: in the first connection mode, controlling, by using the switch module, the transmitting module to be connected to the first port, and controlling the receiving module to be connected to the second port; and in the second connection mode, controlling, by using the switch module, the transmitting module to be connected to the second port, and controlling the receiving module to be connected to the first port.

In a possible implementation, the method further includes: in the third connection mode, receiving received signals of the first band and the second band from the first filter by using the receiving module.

In a possible implementation, the communication apparatus further includes a feedback path. The method further includes: coupling the transmitted signal to an intermediate frequency or a baseband through the feedback path for power control or non-linear compensation processing.

In a possible implementation, the receiving module includes a first receiving module and a second receiving module. The first receiving module is configured to receive the received signal of the first band. The second receiving module is configured to receive the received signal of the second band.

In a possible implementation, the first duplexer includes a first port and a second port. An operating band of the first port is the first band. An operating band of the second port is the second band. The method further includes: in the first connection mode, controlling, by using the switch module, the transmitting module to be connected to the first port, and controlling the second receiving module to be connected to the second port; and in the second connection mode, controlling, by using the switch module, the transmitting module to be connected to the second port, and controlling the first receiving module to be connected to the first port.

In a possible implementation, the receiving module includes a first receiving module and a second receiving module. The first receiving module is configured to receive the received signal of the first band. The second receiving module is configured to receive the received signal of the second band. The method further includes: in the third connection mode, receiving the received signal of the first band from the first duplexer by using the first receiving module, and receiving the received signal of the second band from the first duplexer by using the second receiving module.

In a possible implementation, the first duplexer includes a first port and a second port. An operating band of the first port is the first band. An operating band of the second port is the second band. The method further includes: in the third connection mode, controlling, by using the switch module, the transmitting module to be connected to the first filter, or controlling, by using the switch module, the first receiving module to be connected to the first port, and controlling the second receiving module to be connected to the second port.

In a possible implementation, the communication apparatus further includes a second duplexer, and the connection modes further include a fourth connection mode and a fifth connection mode. The method further includes: in the fourth connection mode, sending a transmitted signal of a third band to the second duplexer by using the transmitting module, and receiving a received signal of a fourth band from the second duplexer by using the receiving module; and in the fifth connection mode, sending a transmitted signal of the fourth band to the second duplexer by using the transmitting module, and receiving a received signal of the third band from the second duplexer by using the receiving module.

In a possible implementation, the communication apparatus further includes a second filter, and the connection modes further include a sixth connection mode. The method further includes: in the sixth connection mode, sending transmitted signals of the third band and the fourth band to the second filter by using the transmitting module.

In a possible implementation, the method further includes: in the sixth connection mode, receiving received signals of the third band and the fourth band from the second filter by using the receiving module.

In a possible implementation, the receiving module includes a third receiving module and a fourth receiving module. The third receiving module is configured to receive the received signal of the third band. The fourth receiving module is configured to receive the received signal of the fourth band.

In a possible implementation, the method further includes: in the sixth connection mode, receiving the received signal of the third band from the second duplexer by using the third receiving module, and receiving the received signal of the fourth band from the second duplexer by using the fourth receiving module.

For example, the communication apparatus may be any communication apparatus described in embodiments corresponding to FIG. 2 to FIG. 9 and FIG. 11 to FIG. 15. For a specific implementation of each step, refer to related descriptions of the foregoing content. Details are not described herein again.

This application further provides a communication system. The communication system includes a network device (or referred to as an access network device) and any communication apparatus described in embodiments corresponding to FIG. 2 to FIG. 9 and FIG. 11 to FIG. 15.

This application further provides a computer-readable storage medium. The computer-readable storage medium stores a computer program. When the computer-readable storage medium is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may understand that various numbers such as "first" and "second" in this application are merely used for differentiation for ease of description, and are not intended to limit a scope of embodiments of this application or a sequence. An execution sequence of each process should be determined based on functions and internal logic of the processes.

A person of ordinary skill in the art may be aware that, modules in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

## Claims

1. A communication apparatus, wherein the communication apparatus comprises a transmitting module, a receiving module, a first duplexer, and a switch module, wherein
the transmitting module is connected to the switch module, the receiving module is connected to the switch module, and the first duplexer is connected to the switch module;
the first duplexer is configured to separate a signal of a first band from a signal of a second band;
the switch module is configured to control switching between connection modes, wherein the connection modes comprise a first connection mode and a second connection mode;
in the first connection mode, the transmitting module is configured to send a transmitted signal of the first band to the first duplexer, and the receiving module is configured to receive a received signal of the second band from the first duplexer; and
in the second connection mode, the transmitting module is configured to send a transmitted signal of the second band to the first duplexer, and the receiving module is configured to receive a received signal of the first band from the first duplexer.

2. The communication apparatus according to claim 1, wherein the communication apparatus further comprises a first filter, the first filter is connected to the switch module, and the connection modes further comprise a third connection mode;
the first filter is configured for the signal of the first band and the signal of the second band to pass through; and
in the third connection mode, the transmitting module is configured to send transmitted signals of the first band and the second band to the first filter.

3. The communication apparatus according to claim 1, wherein the first duplexer comprises a first port and a second port, an operating band of the first port is the first band, and an operating band of the second port is the second band.

4. The communication apparatus according to claim 3, wherein in the first connection mode, the switch module controls the transmitting module to be connected to the first port, and controls the receiving module to be connected to the second port; and
in the second connection mode, the switch module controls the transmitting module to be connected to the second port, and controls the receiving module to be connected to the first port.

5. The communication apparatus according to claim 2, wherein in the third connection mode, the receiving module is configured to receive received signals of the first band and the second band from the first filter.

6. The communication apparatus according to any one of claims 1 to 5, wherein the communication apparatus further comprises a feedback path, and the feedback path is configured to couple the transmitted signal to an intermediate frequency or a baseband for power control or non-linear compensation processing.

7. The communication apparatus according to any one of claims 1 to 4, wherein the receiving module comprises a first receiving module and a second receiving module, the first receiving module is configured to receive the received signal of the first band, and the second receiving module is configured to receive the received signal of the second band.

8. The communication apparatus according to claim 7, wherein the first duplexer comprises a first port and a second port, an operating band of the first port is the first band, and an operating band of the second port is the second band;
in the first connection mode, the switch module controls the transmitting module to be connected to the first port, and controls the second receiving module to be connected to the second port; and
in the second connection mode, the switch module controls the transmitting module to be connected to the second port, and controls the first receiving module to be connected to the first port.

9. The communication apparatus according to claim 2, wherein the receiving module comprises a first receiving module and a second receiving module, the first receiving module is configured to receive the received signal of the first band, and the second receiving module is configured to receive the received signal of the second band; and
in the third connection mode, the first receiving module is configured to receive the received signal of the first band from the first duplexer, and the second receiving module is configured to receive the received signal of the second band from the first duplexer.

10. The communication apparatus according to claim 9, wherein the first duplexer comprises a first port and a second port, an operating band of the first port is the first band, and an operating band of the second port is the second band; and
in the third connection mode, the switch module controls the transmitting module to be connected to the first filter; or
the switch module controls the first receiving module to be connected to the first port, and controls the second receiving module to be connected to the second port.

11. The communication apparatus according to any one of claims 1 to 10, wherein the communication apparatus further comprises a second duplexer, the second duplexer is configured to separate a signal of a third band from a signal of a fourth band, and the connection modes further comprise a fourth connection mode and a fifth connection mode;
in the fourth connection mode, the transmitting module is configured to send a transmitted signal of the third band to the second duplexer, and the receiving module is configured to receive a received signal of the fourth band from the second duplexer; and
in the fifth connection mode, the transmitting module is configured to send a transmitted signal of the fourth band to the second duplexer, and the receiving module is configured to receive a received signal of the third band from the second duplexer.

12. The communication apparatus according to claim 11, wherein the communication apparatus further comprises a second filter, and the connection modes further comprise a sixth connection mode;
the second filter is configured for the signal of the third band and the signal of the fourth band to pass through; and
in the sixth connection mode, the transmitting module is configured to send transmitted signals of the third band and the fourth band to the second filter.

13. The communication apparatus according to claim 12, wherein in the sixth connection mode, the receiving module is configured to receive received signals of the third band and the fourth band from the second filter.

14. The communication apparatus according to claim 12, wherein the receiving module comprises a third receiving module and a fourth receiving module, the third receiving module is configured to receive the received signal of the third band, and the fourth receiving module is configured to receive the received signal of the fourth band.

15. The communication apparatus according to claim 14, wherein in the sixth connection mode, the third receiving module is configured to receive the received signal of the third band from the second duplexer, and the fourth receiving module is configured to receive the received signal of the fourth band from the second duplexer.

16. A communication method, wherein the method is applied to a communication apparatus, the communication apparatus comprises a transmitting module, a receiving module, a first duplexer, and a switch module, and the method comprises:
controlling switching between connection modes by using the switch module, wherein the connection modes comprise a first connection mode and a second connection mode;
in the first connection mode, sending a transmitted signal of a first band to the first duplexer by using the transmitting module, and receiving a received signal of a second band from the first duplexer by using the receiving module; and
in the second connection mode, sending a transmitted signal of the second band to the first duplexer by using the transmitting module, and receiving a received signal of the first band from the first duplexer by using the receiving module.

17. The method according to claim 16, wherein the communication apparatus further comprises a first filter, and the connection modes further comprise a third connection mode; and
the method further comprises:
in the third connection mode, sending transmitted signals of the first band and the second band to the first filter by using the transmitting module.

18. The method according to claim 16, wherein the first duplexer comprises a first port and a second port, an operating band of the first port is the first band, and an operating band of the second port is the second band.

19. The method according to claim 18, wherein the method further comprises:
in the first connection mode, controlling, by using the switch module, the transmitting module to be connected to the first port, and controlling the receiving module to be connected to the second port; and
in the second connection mode, controlling, by using the switch module, the transmitting module to be connected to the second port, and controlling the receiving module to be connected to the first port.

20. The method according to claim 17, wherein the method further comprises:
in the third connection mode, receiving received signals of the first band and the second band from the first filter by using the receiving module.

21. The method according to any one of claims 16 to 20, wherein the communication apparatus further comprises a feedback path, and the method further comprises:
coupling the transmitted signal to an intermediate frequency or a baseband through the feedback path for power control or non-linear compensation processing.

22. The method according to any one of claims 16 to 19, wherein the receiving module comprises a first receiving module and a second receiving module, the first receiving module is configured to receive the received signal of the first band, and the second receiving module is configured to receive the received signal of the second band.

23. The method according to claim 22, wherein the first duplexer comprises a first port and a second port, an operating band of the first port is the first band, and an operating band of the second port is the second band; and
the method further comprises:
in the first connection mode, controlling, by using the switch module, the transmitting module to be connected to the first port, and controlling the second receiving module to be connected to the second port; and
in the second connection mode, controlling, by using the switch module, the transmitting module to be connected to the second port, and controlling the first receiving module to be connected to the first port.

24. The method according to claim 17, wherein the receiving module comprises a first receiving module and a second receiving module, the first receiving module is configured to receive the received signal of the first band, and the second receiving module is configured to receive the received signal of the second band; and
the method further comprises:
in the third connection mode, receiving the received signal of the first band from the first duplexer by using the first receiving module, and receiving the received signal of the second band from the first duplexer by using the second receiving module.

25. The method according to claim 24, wherein the first duplexer comprises a first port and a second port, an operating band of the first port is the first band, and an operating band of the second port is the second band; and
the method further comprises:
in the third connection mode, controlling, by using the switch module, the transmitting module to be connected to the first filter; or
controlling, by using the switch module, the first receiving module to be connected to the first port, and controlling the second receiving module to be connected to the second port.

26. The method according to any one of claims 16 to 25, wherein the communication apparatus further comprises a second duplexer, and the connection modes further comprise a fourth connection mode and a fifth connection mode; and
the method further comprises:
in the fourth connection mode, sending a transmitted signal of a third band to the second duplexer by using the transmitting module, and receiving a received signal of a fourth band from the second duplexer by using the receiving module; and
in the fifth connection mode, sending a transmitted signal of the fourth band to the second duplexer by using the transmitting module, and receiving a received signal of the third band from the second duplexer by using the receiving module.

27. The method according to claim 26, wherein the communication apparatus further comprises a second filter, and the connection modes further comprise a sixth connection mode; and
the method further comprises:
in the sixth connection mode, sending transmitted signals of the third band and the fourth band to the second filter by using the transmitting module.

28. The method according to claim 27, wherein the method further comprises:
in the sixth connection mode, receiving received signals of the third band and the fourth band from the second filter by using the receiving module.

29. The method according to claim 27, wherein the receiving module comprises a third receiving module and a fourth receiving module, the third receiving module is configured to receive the received signal of the third band, and the fourth receiving module is configured to receive the received signal of the fourth band.

30. The method according to claim 29, wherein the method further comprises:
in the sixth connection mode, receiving the received signal of the third band from the second duplexer by using the third receiving module, and receiving the received signal of the fourth band from the second duplexer by using the fourth receiving module.

31. A computer-readable storage medium, wherein the computer-readable storage medium is configured to store instructions, and when the instructions are executed, the method according to any one of claims 16 to 30 is implemented.

32. A computer program product, wherein the computer program product comprises a computer program or instructions, and when the computer program or the instructions is/are run on a computer, the computer is enabled to perform the method according to any one of claims 16 to 30.

33. A communication system, wherein the communication system comprises a network device and the communication apparatus according to any one of claims 1 to 15.
